# FASCICULE DE BREVET EUROPEEN

(11) **EP 2 888 747 B1**
(45) Date de publication et mention de la délivrance du brevet: **27.03.2019**
(21) Numéro de dépôt: 13773286.3
(22) Date de dépôt: 19.08.2013
(51) Int. Cl.: H01F 27/38, H01F 38/02

(54) **DISPOSITIF DE PUISSANCE BOBINE COMPORTANT UN ENROULEMENT D'UN PREMIER BOBINAGE ET UN ENROULEMENT D'UN DEUXIEME BOBINAGE QUI ENVELOPPENT UNE MEME PORTION D'UNE JAMBE DE NOYAU MAGNETIQUE**
GESPULTE STROMVORRICHTUNG MIT EINER WICKLUNG EINER ERSTEN SPULE UND EINER WICKLUNG EINER ZWEITEN SPULE ZUR ABDECKUNG DESSELBEN TEILS EINES MAGNETKERNELEMENTS
COILED POWER DEVICE COMPRISING A WINDING OF A FIRST COILING AND A WINDING OF A SECOND COILING WHICH COVER THE SAME PORTION OF A MAGNETIC CORE MEMBER

(30) Priorité: 23.08.2012 FR 1257947
(43) Date de publication de la demande: 01.07.2015
(73) Titulaire: Safran Electrical & Power, 31702 Blagnac Cedex (FR)
(72) Inventeur: SOREL, Hervé, F-78350 Jouy en Josas (FR); BLEUZEN, Frédéric, F-94700 Maison Alfort (FR)
(74) Mandataire: Gevers & Orès
(86) Numéro de dépôt international: PCT/FR2013/051945
(87) Numéro de publication internationale: WO 2014/029943

(56) Documents cités:
- EP-A1- 0 602 926
- US-A- 6 118 362
- US-A1- 2008 074 911
- US-A1- 2012 075 051

## Description

### DOMAINE TECHNIQUE GENERAL ET ART ANTERIEUR

La présente invention concerne le domaine de l'électronique de puissance et, plus particulièrement, des bobinages couplés utilisés par exemple dans une inductance d'interphase ou un transformateur.

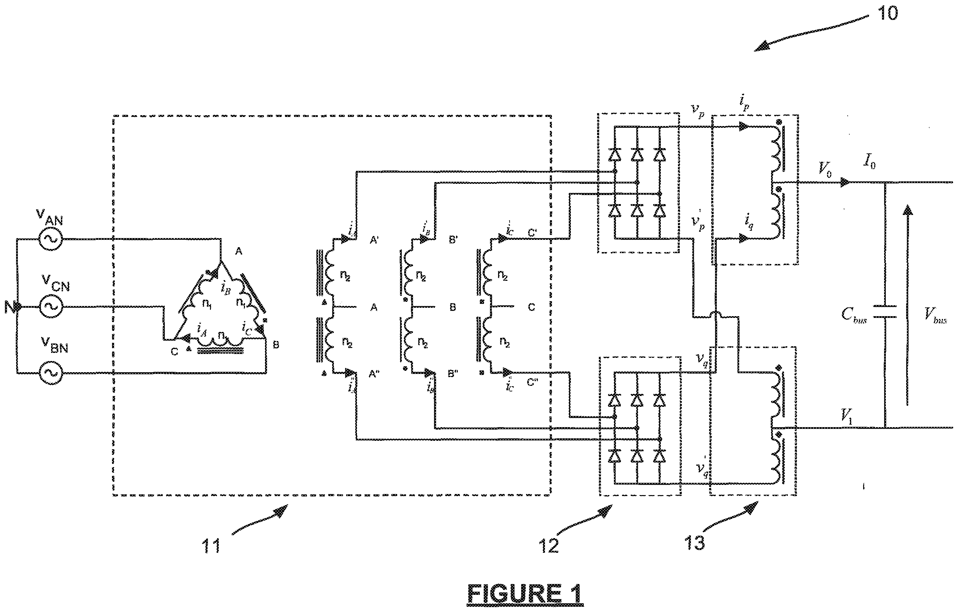

De manière classique, pour transformer une tension alternative en une tension continue, il est connu d'utiliser un convertisseur AC/DC. Parmi ces convertisseurs AC/DC, on connaît par exemple, en référence à la figure 1, un redresseur à diodes 10 dit « dodécaphasé » qui comporte de manière classique un transformateur 11, deux ponts de diodes 12 et deux inductances d'interphase 13. Pour rappel, une inductance d'interphase 13 permet de réaliser la moyenne des tensions en sortie des ponts de diodes 12 comme illustré à la figure 1. Un tel convertisseur AC/DC est par exemple utilisé comme source d'alimentation électrique continue pour commander des actionneurs et ainsi déplacer des organes d'un aéronef (volets, éléments de nacelle).

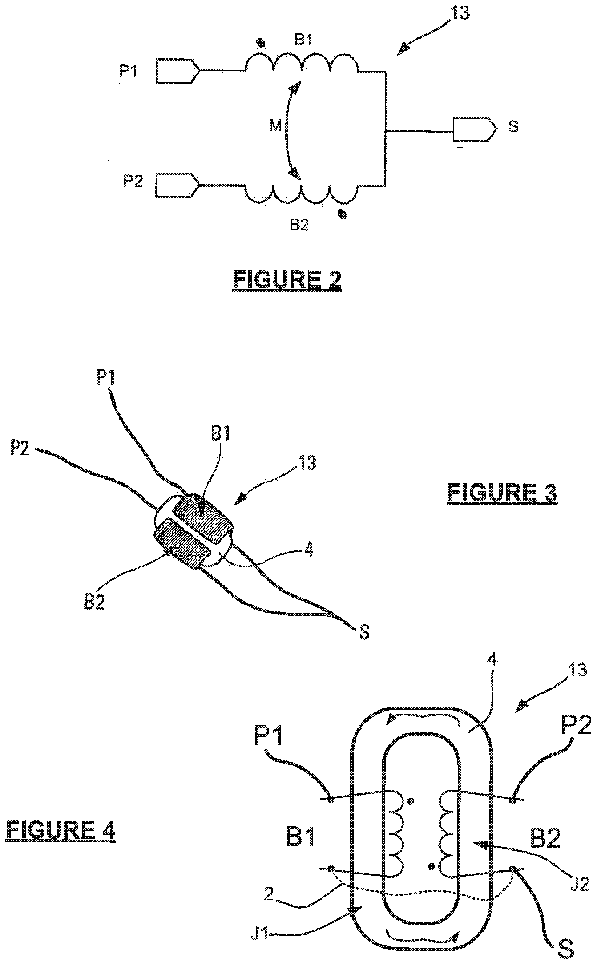

En référence plus particulièrement aux figures 2 à 4, une inductance d'interphase 13 comporte de manière classique deux bobinages B1, B2 qui sont montés en série et couplés ensemble pour générer une inductance mutuelle M comme illustré à la figure 2.

L'inductance interphase 13 comporte de manière classique un noyau magnétique 4 définissant une première jambe J1 et une deuxième jambe J2 qui sont parallèles entre elles. Le noyau magnétique 4 est fermé de manière à guider à travers lui un flux magnétique symbolisé par des flèches sur la figure 4.

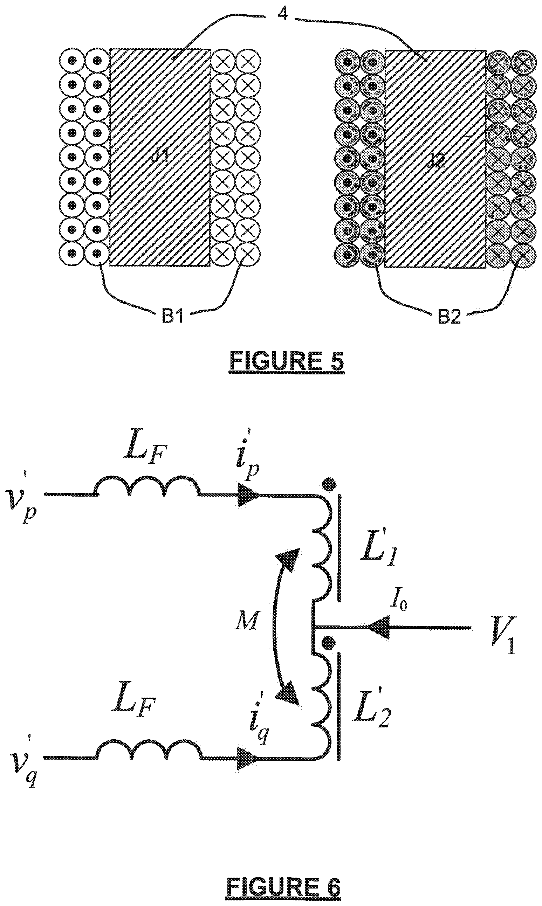

Le premier bobinage B1 comporte un premier enroulement de fils conducteurs habituellement en cuivre ou en aluminium autour de la première jambe J1 dont une première extrémité forme une première borne d'entrée P1. Le deuxième bobinage B2 comporte un deuxième enroulement de fils conducteurs autour de la deuxième jambe J2 dont une première extrémité forme une deuxième borne d'entrée P2. Les deuxièmes extrémités des bobinages B1, B2 sont classiquement reliés ensemble pour former une borne de sortie S. Autrement dit, chaque jambe J1, J2 comporte un enroulement d'un unique bobinage B1, B2 comme illustré à la figure 5.

Ainsi, quand deux tensions sont respectivement appliquées aux bornes d'entrées P1, P2 de l'inductance d'interphase 13, la borne de sortie S réalise la moyenne des tensions si les bobinages B1, B2 ont la même valeur.

En pratique, on modélise chaque bobinage B1, B2 par une inductance idéale L1', L2' en série avec une inductance de fuite Lf comme illustré à la figure 6, l'inductance de fuite Lf correspondant aux fuites de lignes de champ magnétique.

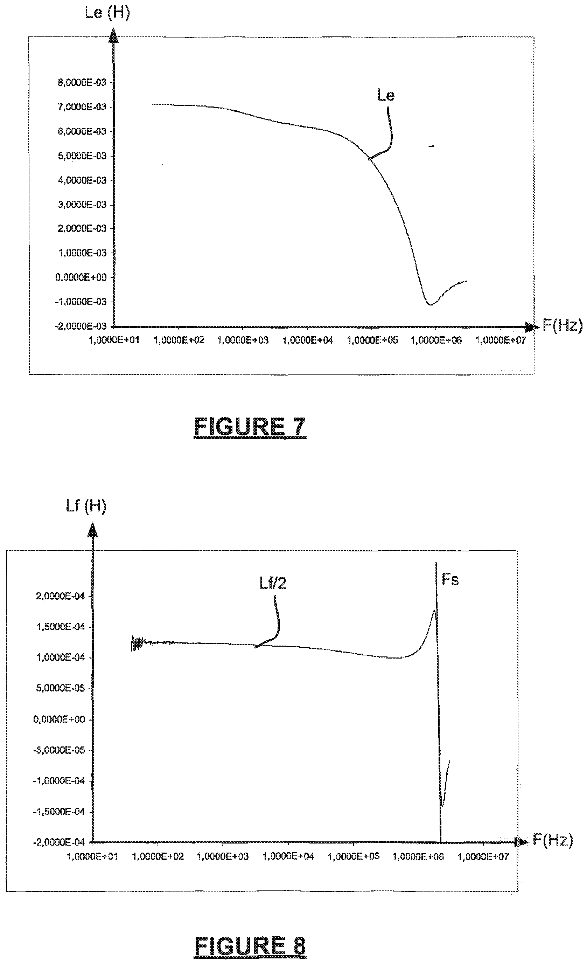

Par exemple, lorsqu'une inductance d'interphase 13 est utilisée dans un convertisseur AC/DC de 10kW alimenté par un réseau 115Vac dans le domaine aéronautique, chaque inductance d'interphase 13 possède une inductance équivalente Le de l'ordre de 7mH à basses fréquences qui chute vers 100 kHz comme illustré à la figure 7. Une telle inductance d'interphase 13 respecte le cahier des charges imposé pour cet exemple de convertisseur AC/DC.

Pour une plage de fonctionnement de l'inductance d'interphase 13 comprise entre DC et 1MHz, on obtient de manière classique une inductance de fuite Lf/2 de valeur sensiblement constante et égale à 120µH comme illustré à la figure 8. Au dessus de 1MHz, l'inductance de fuite Lf entre en résonance avec les capacités parasites de l'inductance d'interphase 13 puis diminue fortement. Autrement dit, l'inductance de fuite Lf disparaît au-delà de 1MHz qui constitue une fréquence seuil d'utilisation Fs.

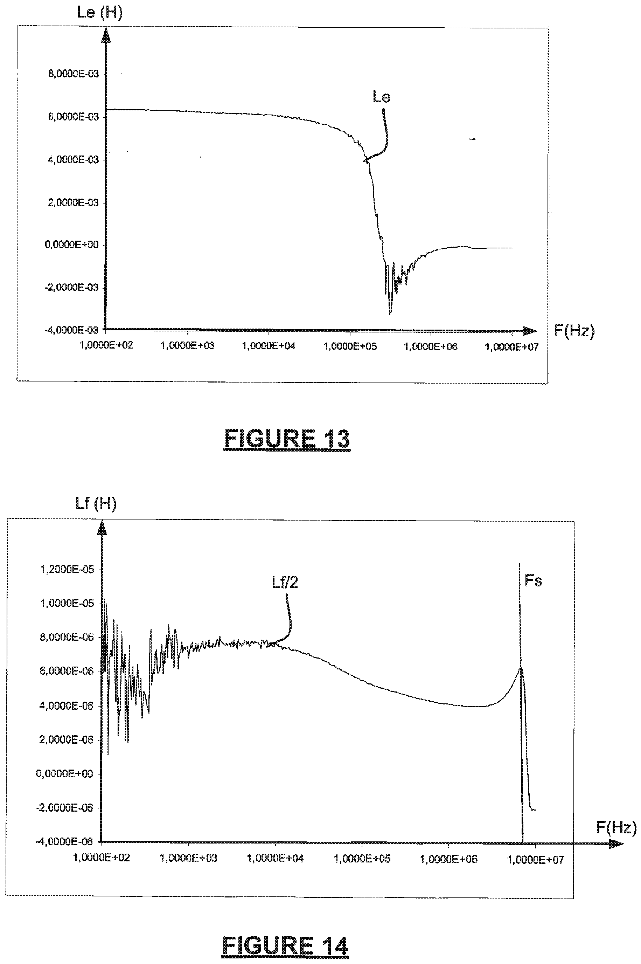

L'inductance de fuite Lf qui existe actuellement pour une inductance interphase 13 présente de nombreux inconvénients. Tout d'abord, sa valeur à basses fréquences est élevée (aux alentours de 120µH à 1kHz) ce qui peut entraîner une instabilité du convertisseur AC/DC en cas de connexion à un bus DC du fait des phénomènes de résonance par couplage avec des capacités Cbus de la figure 13.

A hautes fréquences, l'inductance de fuite Lf permet de limiter l'injection de courant vers le réseau d'alimentation résultant de phénomènes EMI (Electro Magnetic Interference). Dans le cas présent, cette fonction est assurée jusqu'à la fréquence seuil Fs de 1MHz. Au-delà de cette fréquence seuil Fs, l'inductance de fuite Lf disparaît ce qui affecte le réseau d'alimentation et le convertisseur AC/DC ne respecte pas les normes d'émissions conduites en mode différentiel sans l'ajout d'autres composants.

Pour limiter cette résonance à basses fréquences, il est connu d'associer à une inductance d'interphase 13 des capacités de fortes valeurs ou des résistances. Néanmoins, l'ajout de capacités pénalise fortement l'encombrement du convertisseur AC/DC ce qui est proscrit dans le domaine aéronautique pour lequel la masse et l'encombrement sont des contraintes permanentes. L'ajout de résistances présente en outre l'inconvénient d'augmenter l'énergie dissipée par effet Joule ce qui n'est également pas souhaité. Enfin, l'ajout de résistances ou de capacités augmente le coût de fabrication d'un convertisseur AC/DC ce qui présente également un inconvénient.

En pratique, afin de ne pas être pénalisé par l'inductance de fuite Lf, il est courant d'imposer de fortes contraintes d'utilisation pour les convertisseurs AC/DC ce qui présente un inconvénient lors de la conception de systèmes électroniques complexes requérant de tels convertisseurs.

Pour éviter certains de ces inconvénients, il a été proposé dans US-A1-2012/0075051 de diviser le premier et le deuxième bobinage en deux enroulements chacun, et de répartir ces enroulements entre les jambes du noyau magnétique de sorte qu'un enroulement de chaque bobinage soit présent sur chaque jambe.

Le problème à l'origine de l'invention a été présenté en relation avec une inductance interphase mais il concerne plus généralement tout dispositif bobiné comportant deux bobinages couplés, par exemple, un transformateur, pour lequel on souhaite limiter les conséquences négatives générées par l'inductance de fuite.

### PRESENTATION GENERALE DE L'INVENTION

Afin d'éliminer au moins certains des inconvénients, l'invention concerne un dispositif de puissance bobiné comprenant un noyau magnétique comportant au moins une première jambe et une deuxième jambe parallèles entre elles, le dispositif comportant un premier bobinage et un deuxième bobinage de manière à générer une inductance mutuelle entre les bobinages, le dispositif est remarquable en ce que :
- le premier bobinage comporte un premier enroulement de fils conducteurs autour de la première jambe et un deuxième enroulement de fils conducteurs autour de la deuxième jambe qui est relié au premier enroulement, l'extrémité libre du premier enroulement formant une première borne d'entrée et l'extrémité libre du deuxième enroulement formant une borne de sortie ;
- le deuxième bobinage comporte un troisième enroulement de fils conducteurs autour de la deuxième jambe et un quatrième enroulement de fils conducteurs autour de la première jambe qui est relié au troisième enroulement, l'extrémité libre du troisième enroulement formant une deuxième borne d'entrée et l'extrémité libre du quatrième enroulement étant relié à la borne de sortie ;
- le premier enroulement et le quatrième enroulement enveloppent une même portion de la première jambe de manière à limiter l'inductance de fuite du dispositif de puissance bobiné,
- et par le fait que chaque enroulement comporte au moins deux couches de spires, les couches du premier enroulement étant alternées avec les couches du quatrième enroulement sur la première jambe.

Grâce à la répartition des enroulements d'un même bobinage sur les deux jambes et grâce à l'enveloppement de spires de bobinages différents, on diminue de manière importante la valeur de l'inductance de fuite entre les bobinages à basses fréquences. De plus, un tel arrangement des enroulements permet de diminuer la capacité parasite des bobinages ce qui déplace la fréquence seuil d'utilisation à hautes fréquences et limite le phénomène d'injection de courant dans le réseau d'alimentation auquel est relié le dispositif.

Outre ses performances améliorées, le dispositif bobiné présente un encombrement et une masse inchangés ce qui est avantageux. De plus, il n'est pas nécessaire de recourir à des capacités ou à des résistances supplémentaires pour amortir la résonance entre l'inductance de fuite et la capacité Cbus ce qui limite le coût.

De préférence, le deuxième enroulement et le troisième enroulement enveloppent une même portion de la deuxième jambe de manière à limiter l'inductance de fuite du dispositif de puissance bobiné. Ainsi, l'inductance de fuite est limitée de manière globale et équilibrée.

De préférence encore, chaque enroulement comporte le même nombre de spires ce qui permet une superposition deux à deux des spires d'enroulements différents pour limiter l'inductance de fuite de manière optimale. De manière préférée, le fil conducteur de chaque enroulement possède le même diamètre et est réalisé dans le même matériau.

Selon un aspect préféré de l'invention, chaque enroulement comportant au moins une couche de spires, la première jambe comporte une couche inférieure recouverte par une couche supérieure. Ainsi, les lignes de fuite de champ magnétique d'une des couches de spires sont récupérées par l'autre couche de spires.

De préférence, la première jambe comporte une couche inférieure de spires du premier enroulement recouverte par une couche supérieure de spires du quatrième enroulement et la deuxième jambe comporte une couche inférieure de spires du troisième enroulement recouverte par une couche supérieure de spires du deuxième enroulement. Ainsi, chaque bobinage comporte une couche inférieure et une couche supérieure ce qui garantit un comportement équilibré des bobinages. Un tel comportement est avantageux pour une utilisation du dispositif bobiné comme inductance d'interphase, par exemple, pour moyenner deux tensions.

De préférence, la longueur de fil conducteur du premier bobinage est égale à la longueur de fil conducteur du deuxième bobinage de manière à ce que chaque bobinage présente la même résistance ce qui favorise un comportement équilibré lors d'une utilisation comme inductance d'interphase.

Selon une caractéristique de l'invention, chaque enroulement comportant au moins deux couches de spires, les couches du premier enroulement sont alternées avec les couches du quatrième enroulement sur la première jambe de manière à favoriser les interactions entre les bobinages et limiter les inductances de fuite.

De manière préférée, le noyau magnétique est fermé et est composé, de préférence, de deux éléments en C accolés ou de deux éléments en E accolés. Ainsi, on peut répartir les enroulements sur deux ou trois branches du noyau magnétique.

L'invention concerne également un convertisseur AC/DC comportant au moins un dispositif tel que présenté précédemment pour remplir une fonction d'inductance d'interphase.

L'invention vise en outre un transformateur de tension comportant au moins un dispositif tel que présenté précédemment.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation fonctionnelle schématique d'un convertisseur AC/DC (déjà commentée) ;
- la figure 2 est une représentation fonctionnelle schématique d'une inductance d'interphase (déjà commentée) ;
- la figure 3 est une représentation d'une inductance d'interphase (déjà commentée) ;
- la figure 4 est une représentation schématique d'une inductance d'interphase (déjà commentée) ;
- la figure 5 est une représentation schématique des enroulements de spires d'une inductance d'interphase selon l'art antérieur (déjà commentée) ;
- la figure 6 est une représentation fonctionnelles schématique d'une inductance d'interphase avec ses inductances de fuite (déjà commentée) ;
- la figure 7 représente l'évolution de l'inductance équivalente de l'inductance d'interphase en fonction de la fréquence de fonctionnement (déjà commentée) ;
- la figure 8 représente l'évolution de l'inductance de fuite de l'inductance d'interphase en fonction de la fréquence de fonctionnement (déjà commentée) ;
- la figure 9 est une représentation schématique d'une inductance d'interphase ;
- la figure 10 est une représentation fonctionnelle schématique de l'inductance d'interphase de la figure 9 ;
- la figure 11 est une première représentation schématique des enroulements de spires d'une inductance d'interphase;
- la figure 12 est une deuxième représentation schématique des enroulements de spires d'une inductance d'interphase;
- la figure 13 représente l'évolution de l'inductance équivalente d'une inductance d'interphase selon l'invention en fonction de la fréquence de fonctionnement ; et
- la figure 14 représente l'évolution de l'inductance de fuite d'une inductance d'interphase selon l'invention en fonction de la fréquence de fonctionnement.

### DESCRIPTION D'UN OU PLUSIEURS MODES DE REALISATION ET DE MISE EN OEUVRE

L'invention va être présentée pour une inductance d'interphase 3 d'un convertisseur AC/DC mais elle s'applique à tout dispositif de puissance comportant deux bobinages couplés sur un même noyau magnétique, par exemple, pour un transformateur ou une inductance de mode commun.

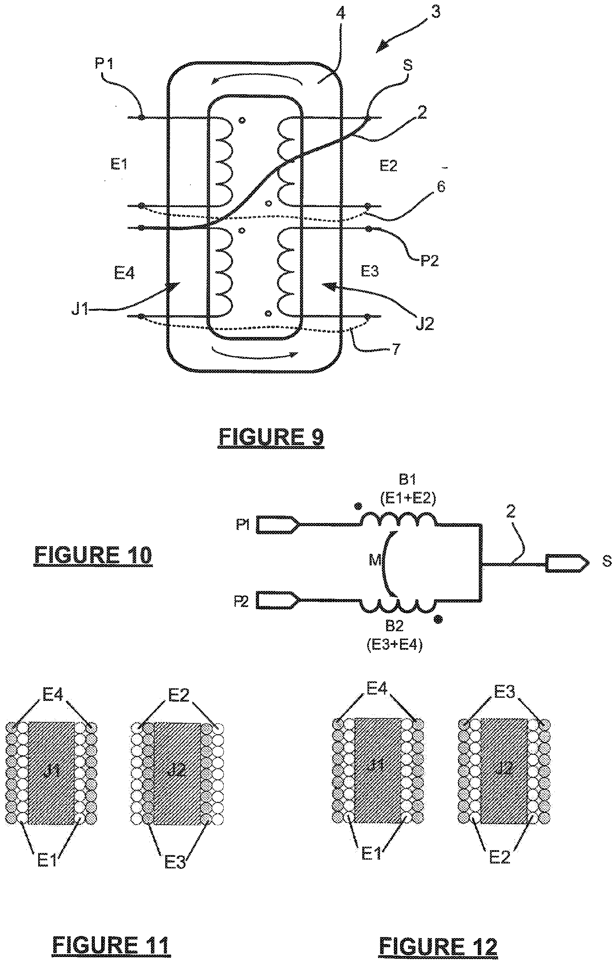

Dans cet exemple, en référence à la figure 9, l'inductance d'interphase 3 comporte un noyau magnétique 4 de forme annulaire et définissant une première jambe J1 et une deuxième jambe J2 qui sont parallèles entre elles. Le noyau magnétique 4 est fermé de manière à guider à travers lui un flux magnétique symbolisé par des flèches sur la figure 9. De manière classique, les deux jambes J1, J2 contiennent en leur milieu une zone de matériaux non magnétiques désignée « entrefer ».

Selon l'art antérieur, une inductance d'interphase comprenait un premier enroulement de fils conducteurs, en cuivre ou en aluminium, sur une première jambe pour former un premier bobinage et un deuxième enroulement de fils conducteurs sur une deuxième jambe pour former un deuxième bobinage. Autrement dit, chaque bobinage était formé sur uniquement une jambe du noyau magnétique.

Dans une évolution de cet art antérieur, chaque bobinage est réparti sur les jambes du noyau magnétique. En d'autres termes, chaque jambe du noyau magnétique accueille des enroulements de spire du premier bobinage B1 et des enroulements de spire du deuxième bobinage B2 ce qui permet auxdits enroulements d'interagir entre eux et d'améliorer le couplage magnétique, c'est-à-dire, limiter l'inductance de fuite Lf de l'inductance interphase 3.

Un exemple de réalisation pratique va être présenté en référence aux figures 9 à 11.

En référence à la figure 9, l'inductance d'interphase 3 comprend un premier bobinage B1 qui comporte un premier enroulement E1 de fils conducteurs autour de la première jambe J1 et un deuxième enroulement E2 de fils conducteurs autour de la deuxième jambe J2 qui est relié au premier enroulement E1, l'extrémité libre du premier enroulement E1 formant une première borne d'entrée P1 et l'extrémité libre du deuxième enroulement E2 formant une borne de sortie S.

L'inductance d'interphase 3 comprend en outre un deuxième bobinage B2 qui comporte au moins un troisième enroulement E3 de fils conducteurs autour de la deuxième jambe J2 et un quatrième enroulement E4 de fils conducteurs autour de la première jambe J1 qui est relié au troisième enroulement E3, l'extrémité libre du troisième enroulement E3 formant une deuxième borne d'entrée P2 et l'extrémité libre du quatrième enroulement E4 étant relié à la borne de sortie S comme illustré à la figure 9.

Dans cet exemple, le premier enroulement E1 et le deuxième enroulement E2 sont reliés par un fil de liaison rapporté 6 mais il va de soi que les enroulements E1, E2 pourraient être constitués d'un seul et même fil conducteur. De manière similaire, le troisième enroulement E3 et le quatrième enroulement E4 sont reliés par un fil de liaison rapporté 7 mais il va de soi que les enroulements E3, E4 pourraient être constitués d'un seul et même fil conducteur.

Enfin, dans cet exemple, le deuxième enroulement E2 et le quatrième enroulement E4 sont reliés par un fil de liaison rapporté 2 formant la borne de sortie S de l'inductance interphase 3.

Ainsi, l'inductance d'interphase 3 de la figure 9 comporte un premier bobinage B1 formé par le premier enroulement E1 et le deuxième enroulement E2 qui sont répartis sur les deux jambes J1, J2 du noyau magnétique 4 et un deuxième bobinage B2 formé par le troisième enroulement E3 et le quatrième enroulement E4 qui sont répartis sur les deux jambes J1, J2 du noyau magnétique 4. Un schéma fonctionnel de l'inductance d'interphase 3 ainsi obtenue est représenté à la figure 10.

En référence à la figure 11 représentant une vue en coupe longitudinale des branches et des enroulements, chaque jambe J1, J2 comporte une superposition de spires d'enroulements différents de manière à limiter la dispersion de lignes de champ magnétique et de réduire l'inductance de fuite Lf.

Toujours en référence à la figure 11, la première jambe J1 est enveloppée premièrement des spires du premier enroulement E1 qui sont recouvertes par les spires du quatrième enroulement E4. Comme les enroulements E1, E4 appartiennent à des bobinages B1, B2 différents, les lignes de champ magnétique d'un des enroulements sont récupérées par l'autre enroulement ce qui limite les fuites. De manière similaire à la première jambe J1, la deuxième jambe J2 est enveloppée premièrement des spires du troisième enroulement E3 qui sont recouvertes par les spires du deuxième enroulement E2. Comme les enroulements E3, E2 appartiennent à des bobinages B1, B2 différents, les fuites magnétiques sont faibles.

En référence à la figure 11, le premier enroulement E1 et le quatrième enroulement E4 enveloppent une même portion de la première jambe J1 tandis que le deuxième enroulement E2 et le troisième enroulement E3 enveloppent une même portion de la deuxième jambe J2.

Comme illustré à la figure 11, Les spires des enroulements d'une même jambe du noyau magnétique 4 sont superposées les unes aux autres. Par la suite, les spires de l'enroulement le plus proche du noyau magnétique 4 sont désignées couche inférieure. De même, les spires de l'enroulement le plus éloigné du noyau magnétique 4 sont désignées couche supérieure.

Dans cet exemple, il a été représenté des jambes J1, J2 ne comportant que deux couches de spires mais il va de soi que plus de deux couches pourraient être disposées sur chaque jambe J1, J2 du noyau magnétique 4.

De manière préférée, chaque couche de spires recouvre entièrement la couche de spires située sous elle de manière à limiter toute perte magnétique.

De préférence, chaque couche de spires comporte le même nombre de spires. De plus, le diamètre du fil conducteur de chaque enroulement est constant de manière à ce que chaque enroulement présente la même résistance électrique ce qui est avantageux pour former, entre autres, une inductance d'interphase équilibrée 3. A titre d'exemple, le diamètre du fil conducteur est de l'ordre de 1mm de diamètre.

L'ordre des couches de spires peut être avantageusement inversé en fonction du procédé de fabrication et des besoins. Ainsi, comme illustré à la figure 12, la deuxième jambe J2 est enveloppée premièrement des spires du deuxième enroulement E2 qui sont recouvertes par les spires du troisième enroulement E3. Dans ce cas, comme les enroulements E3 et E4 du deuxième bobinage B2 sont à l'extérieur il est avantageux que le diamètre du fil conducteur utilisé pour réaliser le premier bobinage B1 soit inférieur à celui utilisé pour réaliser le deuxième bobinage B2 de manière à équilibrer les résistances des bobinages B1 et B2.

Selon un aspect de l'invention, une même couche de spires peut comprendre des spires d'enroulements différents qui sont, de préférence, alternées afin de limiter l'inductance de fuite.

Bien que ce ne soit pas représenté sur les figures 11 et 12, selon l'invention, lorsque la première jambe J1 du noyau magnétique 4 comporte plus de deux couches, chaque bobinage comporte le même nombre de couches. Par exemple, si la première jambe J1 comporte quatre couches, deux couches de spires appartiennent au premier enroulement E1 et deux couches de spires appartiennent au quatrième enroulement E4. Les couches peuvent être alternées ou regroupées deux par deux en fonction du procédé de fabrication ou des besoins.

Il a été présenté un noyau magnétique 4 comportant deux jambes parallèles J1, J2 mais il va de soi que l'invention s'applique à un noyau magnétique 4 comportant plus de deux jambes parallèles, par exemple trois, disposées dans un même plan ou non. Selon cette dernière hypothèse, les enroulements du premier bobinage et du deuxième bobinage sont alors répartis sur les trois jambes.

Pour un noyau magnétique 4 comportant deux jambes parallèles, celui-ci est de préférence réalisé par association de deux demi-noyaux ayant chacun une forme de C. Pour un noyau magnétique 4 comportant trois jambes parallèles, celui-ci est de préférence réalisé par association de deux demi-noyaux ayant chacun une forme de E.

En référence à la figure 13, une inductance d'interphase 3 selon l'invention possède une inductance équivalente Le de l'ordre de 6mH à basses fréquences qui chute vers 100 kHz ce qui correspond aux propriétés générales d'une inductance d'interphase selon l'art antérieur et respecte donc le cahier des charges pour un convertisseur AC/DC adapté pour une application aéronautique.

De manière très avantageuse, l'inductance de fuite Lf/2 pour une inductance d'interphase 3 selon l'invention est égale à 6µH pour une plage de fonctionnement comprise entre DC et 1 MHz comme illustré à la figure 14. La valeur de l'inductance de fuite Lf aux basses fréquences est faible (aux alentours de 6µH à 1kHz), c'est-à-dire, 20 fois plus faible que pour une inductance d'interphase selon l'art antérieur. Il en résulte que le convertisseur AC/DC est très stable en cas de connexion à un bus DC.

Par ailleurs, la valeur de l'inductance de fuite Lf ne chute qu'à partir d'une fréquence seuil Fs de l'ordre de 10MHz à hautes fréquences, c'est-à-dire, à une fréquence seuil Fs qui est 10 fois plus élevée que dans l'art antérieur. Il en résulte que le réseau d'alimentation est protégé sur une plus grande plage de fonctionnement ce qui limite tout risque d'injection de courant vers le réseau d'alimentation résultant de phénomènes EMI (Electro Magnetic Interference).

Outre ses performances améliorées, l'inductance d'interphase 3 possède un encombrement et une masse identiques à l'art antérieur ce qui est très avantageux pour une application dans le domaine aéronautique.

Grâce à l'invention, on peut ainsi obtenir des transformateurs ou des convertisseurs AC/DC plus performants et comportant moins de contraintes d'utilisation.

## Revendications

1. Dispositif de puissance bobiné (3) comprenant un noyau magnétique (4) comportant au moins une première jambe (J1) et une deuxième jambe (J2) parallèles entre elles, le dispositif comportant un premier bobinage (B1) et un deuxième bobinage (B2) de manière à générer une inductance mutuelle (M) entre les bobinages (B1,B2), le premier bobinage et le deuxième bobinage sont configurés comme suit :
- le premier bobinage (B1) comporte au moins un premier enroulement (E1) de fils conducteurs autour de la première jambe (J1) et au moins un deuxième enroulement (E2) de fils conducteurs autour de la deuxième jambe (J2) qui est relié au premier enroulement (E1), l'extrémité libre du premier enroulement (E1) formant une première borne d'entrée (P1) et l'extrémité libre du deuxième enroulement (E2) formant une borne de sortie (S) ;
- le deuxième bobinage (B2) comporte au moins un troisième enroulement (E3) de fils conducteurs autour de la deuxième jambe (J2) et au moins un quatrième enroulement (E4) de fils conducteurs autour de la première jambe (J1) qui est relié au troisième enroulement (E3), l'extrémité libre du troisième enroulement (E3) formant une deuxième borne d'entrée (P2) et l'extrémité libre du quatrième enroulement (E4) étant relié à la borne de sortie (S) ;
- le premier enroulement (E1) et le quatrième enroulement (E4) enveloppent une même portion de la première jambe (J1) de manière à limiter l'inductance de fuite (Lf) du dispositif de puissance bobiné (3), dispositif **caractérisé par le fait que** chaque enroulement (E1-E4) comporte au moins deux couches de spires, les couches du premier enroulement (E1) étant alternées avec les couches du quatrième enroulement (E4) sur la première jambe (J1).

2. Dispositif selon la revendication 1, dans lequel le deuxième enroulement (E2) et le troisième enroulement (E3) enveloppent une même portion de la deuxième jambe (J2) de manière à limiter l'inductance de fuite (Lf) du dispositif de puissance bobiné (3).

3. Dispositif selon l'une des revendications 1 à 2, dans lequel, chaque enroulement (E1-E4) comporte le même nombre de spires.

4. Dispositif selon l'une des revendications 1 à 3, dans lequel, le fil conducteur de chaque enroulement (E1-E4) possède le même diamètre.

5. Dispositif selon la revendication 4, dans lequel, chaque enroulement (E1-E4) comportant au moins deux couches de spires, la première jambe (J1) comporte une couche inférieure de spires du premier enroulement (E1) recouverte par une couche supérieure de spires du quatrième enroulement (E4) et la deuxième jambe (J2) comporte une couche inférieure de spires du troisième enroulement (E3) recouverte par une couche supérieure de spires du deuxième enroulement (E2).

6. Dispositif selon l'une des revendications 1 à 5, dans lequel, la longueur de fil conducteur du premier bobinage (B1) est égale à la longueur de fil conducteur du deuxième bobinage (B2).

7. Dispositif selon l'une des revendications 1 à 6, dans lequel le noyau magnétique est fermé et est composé, de préférence, de deux éléments en C accolés ou de deux éléments en E accolés.

8. Convertisseur AC/DC comportant au moins un dispositif selon l'une des revendications 1 à 7 pour remplir une fonction d'inductance d'interphase.

## Patentansprüche

1. Gespulte Stromvorrichtung (3), umfassend einen Magnetkern (4), der mindestens einen ersten Schenkel (J1) und einen zweiten Schenkel (J2) aufweist, die parallel zueinander sind, wobei die Vorrichtung eine erste Spulenwicklung (B1) und eine zweite Spulenwicklung (B2) so aufweist, dass eine gegenseitige Induktivität (M) zwischen den Spulenwicklungen (B1, B2) erzeugt wird, wobei die erste Spulenwicklung und die zweite Spulenwicklung wie folgt konfiguriert sind:
- die erste Spulenwicklung (B1) weist mindestens eine erste Wicklung (E1) elektrischer Leiter um den ersten Schenkel (J1) und mindestens eine zweite Wicklung (E2) elektrischer Leiter um den zweiten Schenkel (J2) auf, der mit der ersten Wicklung (E1) verbunden ist, wobei das freie Ende der ersten Wicklung (E1) einen ersten Eingangsanschluss (P1) bildet und das freie Ende der zweiten Wicklung (E2) einen Ausgangsanschluss (S) bildet;
- die zweite Spulenwicklung (B2) weist mindestens eine dritte Wicklung (E3) elektrischer Leiter um den zweiten Schenkel (J2) und mindestens eine vierte Wicklung (E4) elektrischer Leiter um den ersten Schenkel (J1) auf, der mit der dritten Wicklung (E3) verbunden ist, wobei das freie Ende der dritten Wicklung (E3) einen zweiten Eingangsanschluss (P2) bildet und das freie Ende der vierten Wicklung (E4) mit dem Ausgangsanschluss (S) verbunden ist;
- die erste Wicklung (E1) und die vierte Wicklung (E4) decken einen selben Abschnitt des ersten Schenkels (J1) so ab, dass die Streuinduktivität (Lf) der gespulten Stromvorrichtung (3) begrenzt wird,
wobei die Vorrichtung **gekennzeichnet ist**
**durch** die Tatsache, dass jede Wicklung (E1-E4) mindestens zwei Windungsschichten aufweist, wobei die Schichten der ersten Wicklung (E1) mit den Schichten der vierten Wicklung (E4) auf dem ersten Schenkel (J1) abwechseln.

2. Vorrichtung nach Anspruch 1, wobei die zweite Wicklung (E2) und die dritte Wicklung (E3) einen selben Abschnitt des zweiten Schenkels (J2) so abdecken, dass die Streuinduktivität (Lf) der gespulten Stromvorrichtung (3) begrenzt wird.

3. Vorrichtung nach einem der Ansprüche 1 bis 2, wobei jede Wicklung (E1-E4) die gleiche Anzahl von Windungen aufweist.

4. Vorrichtung nach einem der Ansprüche 1 bis 3, wobei der elektrische Leiter jeder Wicklung (E1-E4) den gleichen Durchmesser besitzt.

5. Vorrichtung nach Anspruch 4, wobei jede Wicklung (E1-E4) mindestens zwei Windungsschichten aufweist, wobei der erste Schenkel (J1) eine untere Windungsschicht der ersten Wicklung (E1) aufweist, die durch eine obere Windungsschicht der vierten Wicklung (E4) abgedeckt ist, und der zweite Schenkel (J2) eine untere Windungsschicht der dritten Wicklung (E3) aufweist, die durch eine obere Windungsschicht der zweiten Wicklung (E2) abgedeckt ist.

6. Vorrichtung nach einem der Ansprüche 1 bis 5, wobei die Länge des elektrischen Leiters der ersten Spulenwicklung (B1) gleich der Länge des elektrischen Leiters der zweiten Spulenwicklung (B2) ist.

7. Vorrichtung nach einem der Ansprüche 1 bis 6, wobei der Magnetkern geschlossen ist und vorzugsweise aus zwei C-förmigen aneinandergefügten Elementen oder aus zwei E-förmigen aneinandergefügten Elementen besteht.

8. AC/DC-Wandler, der mindestens eine Vorrichtung nach einem der Ansprüche 1 bis 7 aufweist, um eine Interphasen-Induktivitäts-Funktion zu erfüllen.

## Claims

1. Coiled power device (3) comprising a magnetic core (4) comprising at least one first leg (J1) and one second leg (J2) parallel to one another, the device comprising a first coil (B1) and a second coil (B2) so as to generate mutual inductance (M) between the coils (B1, B2), the first coil and the second coil are configured as follows:
- the first coil (B1) comprises at least one first winding (E1) of conductive wires around the first leg (J1) and at least one second winding (E2) of conductive wires around the second leg (J2), which is connected to the first winding (E1), the free end of the first winding (E1) forming a first input terminal (P1) and the free end of the second winding (E2) forming an output terminal (S);
- the second coil (B2) comprises at least one third winding (E3) of conductive wires around the second leg (J2) and at least one fourth winding (E4) of conductive wires around the first leg (J1), which is connected to the third winding (E3), the free end of the third winding (E3) forming a second input terminal (P2) and the free end of the fourth winding (E4) being connected to the output terminal (S);
- the first winding (E1) and the fourth winding (E4) enveloping the same portion of the first leg (J1) so as to limit the leakage inductance (Lf) of the coiled power device (3), the device being **characterised by** the fact that each winding (E1-E4) comprises at least two layers of turns, the layers of the first winding (E1) alternating with the layers of the fourth winding (E4) on the first leg (J1).

2. Device according to claim 1, wherein the second winding (E2) and the third winding (E3) envelope the same portion of the second leg (J2) so as to limit the leakage inductance (Lf) of the coiled power device (3).

3. Device according to one of claims 1 to 2, wherein each winding (E1-E4) comprises the same number of turns.

4. Device according to one of claims 1 to 3, wherein the conductive wire of each winding (E1-E4) has the same diameter.

5. Device according to claim 4, wherein, each winding (E1-E4) comprising at least two layers of turns, the first leg (J1) comprises a bottom layer of turns of the first winding (E1) covered by a top layer of turns of the fourth winding (E4) and the second leg (J2) comprises a bottom layer of turns of the third winding (E3) covered by a top layer of turns of the second winding (E2).

6. Device according to one of claims 1 to 5, wherein, the length of the conductive wire of the first coil (B1) is equal to the length of the conductive wire of the second coil (B2).

7. Device according to one of claims 1 to 6, wherein the magnetic core is closed and is preferably composed of two contiguous C-shaped elements or two contiguous E-shaped elements.

8. AC/DC converter, comprising at least one device according to one of claims 1 to 7 for fulfilling an interphase inductance function.
